(19) Europäisches Patentamt
European Patent Office
Office européen des brevets

(11) **EP 4 518 048 A1**

(12) **EUROPEAN PATENT APPLICATION**
published in accordance with Art. 153(4) EPC

(43) Date of publication:
**05.03.2025 Bulletin 2025/10**

(21) Application number: **23905822.5**

(22) Date of filing: **15.12.2023**

(51) International Patent Classification (IPC):
**H01R 31/06** [(2006.01)]

(52) Cooperative Patent Classification (CPC):
**H01R 31/06**

(86) International application number:
**PCT/CN2023/139034**

(87) International publication number:
**WO 2024/131658 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.12.2022 CN 202211634992**

(71) Applicant: **Nanjing Chervon Industry Co., Ltd.**
**Nanjing, Jiangsu 211106 (CN)**

(72) Inventors:
• **LIU, Yangzi**
  **Nanjing, Jiangsu 211106 (CN)**
• **GENG, Zheng**
  **Nanjing, Jiangsu 211106 (CN)**
• **ZHANG, Yuexiang**
  **Nanjing, Jiangsu 211106 (CN)**
• **LI, Zhengzheng**
  **Nanjing, Jiangsu 211106 (CN)**

(74) Representative: **Sun, Yiming**
  **HUASUN Patent- und Rechtsanwälte**
  **Friedrichstraße 33**
  **80801 München (DE)**

(54) **ADAPTER, ELECTRIC DEVICE, AND SYSTEM**

(57)     Provided is an adapter including a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The housing forms an accommodation cavity, the first interface and the second interface are disposed in the accommodation cavity, the third interface is disposed outside the accommodation cavity, and when the first battery pack is mounted to the adapter, at least 70% of the first battery pack is accommodated in the accommodation cavity.

FIG. 1A

EP 4 518 048 A1

## Description

This application claims priority to Chinese Patent Application No. 202211634992.4 filed with the China National Intellectual Property Administration (CNIPA) on Dec. 19, 2022, the disclosure of which is incorporated herein by reference in its entirety.

## TECHNICAL FIELD

The present application relates to the field of power sources, for example, an adapter, an electrical apparatus, and a related system.

## BACKGROUND

Outdoor traveling apparatuses with a requirement on the battery life impose relatively high requirements on the used energy storage devices. The energy storage devices used in the outdoor traveling apparatuses on the market are often not interchangeable with the energy storage devices of other power tools, causing a waste of resources. Home energy storage systems also face a similar problem.

This part provides background information related to the present application, and the background information is not necessarily the existing art.

## SUMMARY

An object of the present application is to solve or at least alleviate part or all of the preceding problems. The present application provides an adapter. The adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The housing forms an accommodation cavity, the first interface and the second interface are disposed in the accommodation cavity, the third interface is disposed outside the accommodation cavity, and when the first battery pack is mounted to the adapter, at least 70% of the first battery pack is accommodated in the accommodation cavity.

In an example, the electrical apparatus includes a power supply compartment, and when the adapter is mounted to the power supply compartment, the adapter is accommodated in the power supply compartment.

In an example, the length of the accommodation cavity in a direction in which the first battery pack is inserted and removed is defined as the depth of the accommodation cavity, the length of the first battery pack in the direction in which the first battery pack is inserted and removed is defined as the height of the first battery pack, and the depth of the accommodation cavity is greater than or equal to 60% of the height of the first battery pack.

In an example, the first battery pack and the second battery pack each have a voltage greater than or equal to 40 V.

In an example, the adapter further includes a handle.

In an example, a partition is provided in the accommodation cavity, and the first interface and the second interface are disposed on two surfaces of the partition.

In an example, the first interface and the second interface are disposed on two opposite surfaces of the accommodation cavity.

In an example, the housing is a rectangular cuboid.

An electrical apparatus system includes an electrical apparatus and an adapter, the electrical apparatus is configured to be connected to a power supply device and powered by the power supply device, and the adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to the electrical apparatus in a detachable manner. The power supply device includes a connection interface configured to be electrically and mechanically connected to the electrical apparatus in a detachable manner. The third interface is disposed on an outer surface of the housing, the third interface is the same as the connection interface, and the volume ratio of the adapter to the power supply device is greater than or equal to 0.7 and less than or equal to 1.2.

In an example, the housing is a rectangular cuboid.

In an example, the power supply device is a battery pack connectable to the electrical apparatus directly.

In an example, the power supply device includes a battery pack and an adaption structure.

In an example, the housing includes an accommodation cavity.

An adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The electrical apparatus is configured to be connected to a power supply device and powered by the power supply device, and the power supply device includes a connection interface configured to be electrically and mechanically connected to the electrical apparatus in a detachable manner. The third interface is disposed on an outer surface of the housing, the third interface is the same as the connection interface, and the area of a cross-section of the adapter in a plane parallel to the third interface is greater than or equal to 60% of the area of a cross-section of the power supply device in the plane.

In an example, the power supply device is a battery pack connectable to the electrical apparatus directly.

In an example, the power supply device includes a battery pack and an adaption structure.

In an example, the adapter is in the shape of an inverse T.

An electrical apparatus system includes an electrical apparatus and an adapter, the electrical apparatus is configured to be powered by a third battery pack, and the adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to the electrical apparatus in a detachable manner. The first battery pack, the second battery pack, and the third battery pack have substantially the same rated voltage.

An adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The electrical apparatus is further configured to be powered by a third battery pack. The first battery pack, the second battery pack, and the third battery pack have substantially the same rated voltage.

In an example, the first battery pack and the second battery pack are connected in parallel.

In an example, the electrical apparatus includes a switch, and when the electrical apparatus identifies the first battery pack and the second battery pack are provided for power supply, the switch is turned on so that the first battery pack and the second battery pack are connected in parallel.

In an example, the first battery pack and the second battery pack are each applicable to a power tool.

In an example, the rated voltage is greater than or equal to 40 V.

An adapter includes a housing; a first interface configured to be electrically and mechanically connected to a first battery pack in a detachable manner and including a positive terminal, a negative terminal, and a communication terminal; a second interface configured to be electrically and mechanically connected to a second battery pack in a detachable manner and including a positive terminal, a negative terminal, and a communication terminal; and a third interface configured to be electrically and mechanically connected to an electrical apparatus in a detachable manner. The third interface includes a first positive terminal, a second positive terminal, a total negative terminal, and a total communication terminal, the positive terminal of the first interface is connected to the first positive terminal, and the positive terminal of the second interface is connected to the second positive terminal.

In an example, the negative terminal of the first interface and the negative terminal of the second interface are connected in parallel to the total negative terminal.

In an example, the communication terminal of the first interface and the communication terminal of the second interface are connected to the total communication terminal for communication protocol conversion.

In an example, the electrical apparatus includes a switch, and when the electrical apparatus identifies the first battery pack and the second battery pack, the switch is turned on so that the first positive terminal and the second positive terminal are connected in parallel.

In an example, the electrical apparatus acquires data of the adapter through the total communication terminal.

In an example, the electrical apparatus is further configured to be powered by a third battery pack, and an interface of the third battery pack includes two positive terminals and one negative terminal.

An adapter includes a housing; a first interface configured to be electrically and mechanically connected to a first battery pack in a detachable manner and including a positive terminal, a negative terminal, and a communication terminal; a second interface configured to be electrically and mechanically connected to a second battery pack in a detachable manner and including a positive terminal, a negative terminal, and a communication terminal; and a third interface configured to be electrically and mechanically connected to an electrical apparatus in a detachable manner and including a positive terminal, a negative terminal, and a communication terminal. The positive terminal of the first interface is connected to the positive terminal of the third interface, the negative terminal of the second interface is connected to the negative terminal of the third interface, the adapter further includes a controller and a switching circuit, and the controller is configured to control the switching circuit to switch the first battery pack and the second battery pack between a parallel connection and a series connection.

In an example, when the first battery pack and the second battery pack are configured to be connected in parallel, the negative terminal of the first interface and the negative terminal of the second interface are connected in parallel to the negative terminal of the third interface, and the positive terminal of the first interface and the positive terminal of the second interface are connected in parallel to the positive terminal of the third interface.

In an example, when the first battery pack and the second battery pack are configured to be connected in series, the negative terminal of the first interface is connected to the positive terminal of the second interface.

An electrical apparatus system includes an electrical apparatus and an adapter, the electrical apparatus is configured to be powered by a third battery pack, and the adapter includes a housing; a first interface configured to be electrically and mechanically connected to a first battery pack in a detachable manner, where a terminal assembly of the first interface includes a positive terminal, a negative terminal, and a communication terminal; a second interface configured to be electrically and mechanically connected to a second battery pack in a detachable manner, where a terminal assembly of the second interface includes a positive terminal, a negative terminal, and a communication terminal; and a third interface configured to be electrically and mechanically connected to the electrical apparatus in a detachable manner. The third battery pack includes a connection interface, the third interface has the same structural parts as the connection interface, and the third interface and the connection interface have different terminal assemblies.

In an example, a terminal assembly of the connection interface includes a charging positive terminal, a discharging positive terminal, a negative terminal, and a communication terminal.

In an example, a terminal assembly of the third interface includes a positive terminal, a negative terminal, and a communication terminal.

In an example, the negative terminal of the first interface and the negative terminal of the second interface are connected in parallel to a negative terminal of the third interface, and the positive terminal of the first interface and the positive terminal of the second interface are connected in parallel to a positive terminal of the third interface.

In an example, the negative terminal of the first interface and the positive terminal of the second interface are connected in series, the positive terminal of the first interface is electrically connected to a positive terminal of the third interface, and the negative terminal of the second interface is electrically connected to a negative terminal of the third interface.

In an example, the adapter further includes a switching circuit configured to switch the first battery pack and the second battery pack between a parallel connection and a series connection.

An electrical apparatus includes a power supply compartment configured for mounting an energy storage device to supply power to the electrical apparatus. The power supply compartment includes a first-type interface configured to be electrically and mechanically connected to a first-type battery pack in a detachable manner; and at least two second-type interfaces, each of which is configured to be electrically and mechanically connected to a second-type battery pack in a detachable manner. When the first-type battery pack is mounted to the power supply compartment, the first-type battery pack shields the at least two second-type interfaces.

In an example, the first-type interface is not coplanar with at least one of the second-type interfaces.

In an example, the first-type interface is coplanar with at least one of the second-type interfaces.

In an example, the at least two second-type interfaces are opposite to each other, and the volume of the first-type battery pack is greater than or equal to twice the volume of the second-type battery pack.

In an example, the electrical apparatus is an outdoor traveling apparatus.

In an example, the electrical apparatus is an energy station.

An electrical apparatus includes a housing; and a power supply assembly configured to supply power to the electrical apparatus. The power supply assembly includes multiple mounting portions.

Any one of a first-type battery pack or a second-type battery pack is selectively mounted to each mounting portion of the multiple mounting portions, the multiple mounting portions have the same structure, and the first-type battery pack and the second-type battery pack have different interfaces.

In an example, each mounting portion includes a first-type interface applicable to the first-type battery pack and a second-type interface applicable to the second-type battery pack.

In an example, the second-type battery pack is mounted to the mounting portion via an adapter.

In an example, the volume of the first-type battery pack is greater than or equal to twice the volume of the second-type battery pack.

In an example, the electrical apparatus is an outdoor traveling apparatus.

In an example, the electrical apparatus is an energy station.

An electrical apparatus includes a housing; and a power supply assembly configured to supply power to the electrical apparatus. The power supply assembly includes multiple mounting portions.

Any one of a first-type battery pack or a second-type battery pack is selectively mounted to each mounting portion of the multiple mounting portions, the multiple mounting portions have the same structure, and at least one of the energy ratio, the capacity ratio, and the volume ratio of the first-type battery pack to the second-type battery pack is greater than or equal to 5.

In an example, each mounting portion includes a first-type interface applicable to the first-type battery pack and a second-type interface applicable to the second-type battery pack.

In an example, the second-type battery pack is mounted to the mounting portion via an adapter.

In an example, the total energy of the first-type battery pack is greater than 2 kWh.

In an example, the electrical apparatus is an outdoor traveling apparatus.

In an example, the electrical apparatus is an energy station.

An electrical apparatus system includes an electrical apparatus and an adapter, the electrical apparatus is configured to be powered by a third battery pack, and the adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to the electrical apparatus in a detachable manner. The weight ratio of the first battery pack or the second battery pack to the third battery pack is greater than or equal to $\frac{1}{20}$ and less than or equal to $\frac{1}{2}$.

In an example, the first battery pack and the second battery pack are connected in parallel.

In an example, the electrical apparatus includes a switch, and when the electrical apparatus detects the first battery pack and the second battery pack are provided for power supply, the switch is turned on so that the first battery pack and the second battery pack are connected in parallel.

In an example, the first battery pack, the second battery pack, and the third battery pack each have a rated voltage greater than or equal to 40 V.

In an example, the first battery pack and the third battery pack have different cells.

An adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The electrical apparatus is further configured to be powered by a third battery pack. The weight ratio of the first battery pack or the second battery pack to the third battery pack is greater than or equal to $\frac{1}{20}$ and less than or equal to $\frac{1}{2}$.

An electrical apparatus system includes an electrical apparatus and an adapter, the electrical apparatus is configured to be powered by a third battery pack, and the adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to the electrical apparatus in a detachable manner. The volume ratio of the first battery pack or the second battery pack to the third battery pack is greater than or equal to $\frac{1}{15}$ and less than or equal to $\frac{1}{2}$.

In an example, the first battery pack and the second battery pack are connected in parallel.

In an example, the electrical apparatus includes a switch, and when the electrical apparatus detects the first battery pack and the second battery pack are provided for power supply, the switch is turned on so that the first battery pack and the second battery pack are connected in parallel.

In an example, the first battery pack, the second battery pack, and the third battery pack each have a rated voltage greater than or equal to 40 V.

In an example, the first battery pack and the third battery pack have different cells.

An adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The electrical apparatus is further configured to be powered by a third battery pack. The volume ratio of the first battery pack or the second battery pack to the third battery pack is greater than or equal to $\frac{1}{15}$ and less than or equal to $\frac{1}{2}$.

An electrical apparatus system includes an electrical apparatus and an adapter, the electrical apparatus is configured to be powered by a third battery pack, and the adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to the electrical apparatus in a detachable manner. The ratio of the rated capacity of the first battery pack or the second battery pack to the rated capacity of the third battery pack is greater than or equal to $\frac{1}{30}$ and less than or equal to $\frac{1}{2}$.

In an example, the first battery pack and the second battery pack are connected in parallel.

In an example, the electrical apparatus includes a switch, and when the electrical apparatus detects the first battery pack and the second battery pack are provided for power supply, the switch is turned on so that the first battery pack and the second battery pack are connected in parallel.

In an example, the first battery pack, the second battery pack, and the third battery pack each have a rated voltage greater than or equal to 40 V.

In an example, the first battery pack and the third battery pack have different cells.

An adapter includes a housing; a first interface configured to be electrically and mechanically connected to a first battery pack in a detachable manner; a second interface configured to be electrically and mechanically connected to a second battery pack in a detachable manner; and a third interface configured to be electrically and mechanically connected to an electrical apparatus in a detachable manner. The electrical apparatus is further configured to be powered by a third battery pack. The ratio of the rated capacity of the first battery pack or the second battery pack to the rated capacity of the third battery pack is greater than or equal to $\frac{1}{30}$ and less than or equal to $\frac{1}{2}$.

In an example, the housing forms an accommodation cavity for accommodating the first battery pack or the second battery pack.

In an example, the first interface and the second interface are disposed in the accommodation cavity, and the third interface is disposed outside the accommodation cavity.

In an example, the electrical apparatus includes a power supply compartment, and when the adapter is mounted to the power supply compartment, the adapter is accommodated in the power supply compartment.

In an example, the electrical apparatus is a riding mower.

In an example, the housing is a rectangular cuboid, the length of the accommodation cavity in a direction in which the first battery pack is inserted and removed is defined as the depth of the accommodation cavity, the length of the first battery pack in the direction in which the first battery pack is inserted and removed is defined as the height of the first battery pack, and the depth of the accommodation cavity is greater than or equal to 60% of the height of the first battery pack.

In an example, the weight ratio of the first battery pack or the second battery pack to the third battery pack is greater than or equal to $\frac{1}{20}$ and less than or equal to $\frac{1}{2}$.

In an example, the adapter further includes a handle.

In an example, a partition is provided in the accommodation cavity, and the first interface and the second interface are disposed on two surfaces of the partition.

In an example, the first interface and the second interface are disposed on two opposite surfaces of the accommodation cavity.

In an example, the first interface and the second interface are the same.

In an example, the first battery pack, the second battery pack, and the third battery pack have substantially the same rated voltage.

In an example, the first battery pack has a rated voltage greater than or equal to 40 V, and the first battery pack supplies power to a power tool.

In an example, the first battery pack and the third battery pack have different cells.

In an example, the first battery pack and the second battery pack are different in capacity.

A system including the adapter, electrical apparatus, and battery pack provided in the present application makes it convenient for a user to flexibly select the power supply assembly of the electrical apparatus according to the need and budget of the user, greatly improving the interchangeability and utilization of different types of battery packs.

## BRIEF DESCRIPTION OF DRAWINGS

FIG. 1A is a perspective view of an adapter according to an example of the present application.

FIG. 1B is a side view of an adapter according to an example of the present application.

FIG. 2A is a perspective view of a battery pack mounted to the adapter shown in FIG. 1A or 1B.

FIG. 2B is a side view of the battery pack shown in FIG. 2A.

FIG. 2C shows a cell group of the battery pack shown in FIG. 2A.

FIG. 3A is a perspective view of an electrical apparatus to which the adapter shown in FIG. 1A or 1B is mounted according to an example of the present application.

FIG. 3B is a perspective view of an electrical apparatus to which the adapter shown in FIG. 1A or 1B is mounted according to another example of the present application.

FIG. 4 is a perspective view of a power supply compartment of an electrical apparatus according to an example of the present application.

FIG. 5A is a perspective view of a battery pack mountable to the power supply compartment shown in FIG. 4.

FIG. 5B is an exploded view of the battery pack shown in FIG. 5A.

FIG. 5C is a partial enlarged view of a terminal assembly of the battery pack shown in FIG. 5A.

FIG. 6 is a schematic view of power platforms to which the battery pack shown in FIGS. 2A to 2C belongs.

FIG. 7 is a schematic view of power platforms to which the battery pack shown in FIGS. 5A to 5C belongs.

FIG. 8 is a perspective view of an adapter according to another example of the present application.

FIG. 9 is a perspective view of an adapter according to another example of the present application.

FIG. 10 is a front view of an adapter according to another example of the present application.

FIG. 11 is a circuit schematic of an adapter according to an example of the present application.

FIG. 12 is a circuit schematic of an adapter according to another example of the present application.

FIG. 13 is a perspective view of a multi-purpose power supply compartment according to an example of the present application.

FIG. 14 is a perspective view of an electrical apparatus according to an example of the present application.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

It should be noted that the terms "first", "second", etc. in the detailed description and claims of the present application and the above-mentioned drawings are used to distinguish similar objects, and are not necessarily used to describe a specific order or sequence. It should be understood that the data used in this way can be interchangeable where appropriate, so that the embodiments of the present application described herein can be implemented in an order other than those illustrated or described herein. In addition, the term "comprising" and any variation thereof are intended to cover non-exclusive inclusions, for example, a process, method, system, product or device comprising a series of steps or units is not necessarily limited to those steps or units clearly listed, but may include other steps or units that are not clearly listed or inherent to these processes, methods, products or devices.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

An adapter according to an example of the present application is described below in conjunction with drawings.

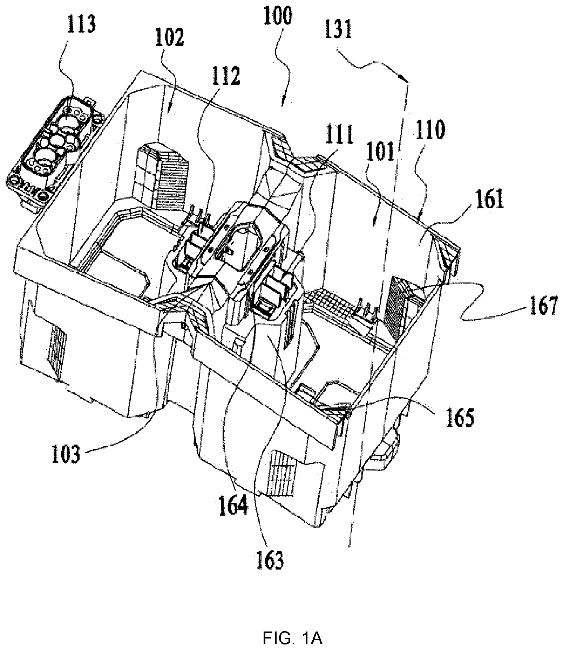

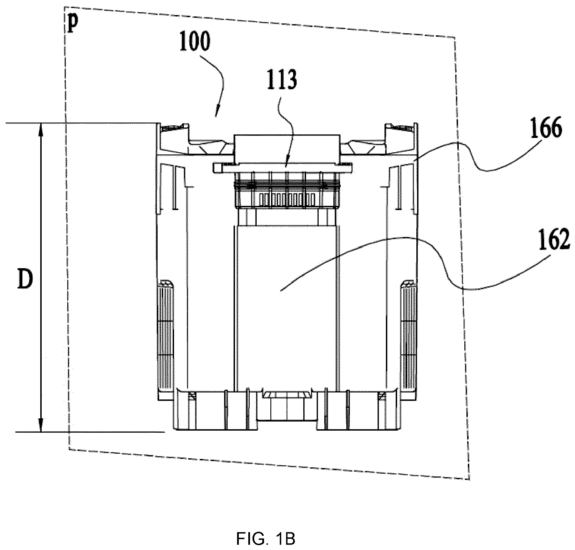

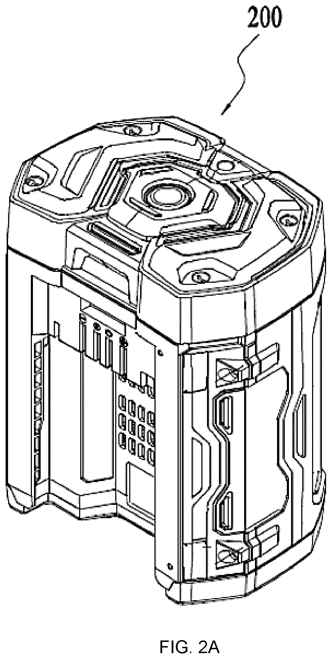

As shown in FIGS. 1A, 1B, 2A, 2B, 2C, 3A, and 3B, where FIG. 2A is a perspective view of a battery pack mounted to the adapter shown in FIG. 1A or 1B of the present application, this example provides an adapter 100 to which a battery pack applicable to a power tool is mountable and which is mounted to an electrical apparatus 400 to supply power to the electrical apparatus 400. In an example, the electrical apparatus 400 is an outdoor traveling apparatus such as a riding mower 410, an all-terrain vehicle 500, or a tractor 700. In an example, the electrical apparatus 400 is an energy storage device such as an energy station 420.

Referring to FIGS. 1A and 1B, the adapter 100 is substantially a rectangular cuboid in appearance, the adapter 100 includes a housing 110, and the housing 110 forms an accommodation cavity. Depending on the structural design of the adapter 100, one, two, or multiple accommodation cavities may be provided. The multiple accommodation cavities may be the same or different. In this example, the adapter 100 includes two substantially symmetrical accommodation cavities, which are referred to as a first accommodation cavity 101 and a second accommodation cavity 102 to facilitate the subsequent description.

The adapter 100 includes a first interface 111 and a second interface 112. Accordingly, the first interface 111 and the second interface 112 are disposed in the first accommodation cavity 101 and the second accommodation cavity 102, respectively. A first battery pack 200 may be mounted to the first accommodation cavity 101 and be electrically and mechanically connected to the first interface 111 in a detachable manner. A second battery pack 250 may be mounted to the second accommodation cavity 102 and be electrically and mechanically connected to the second interface 112 in a detachable manner. The adapter 100 further includes a third interface 113 configured to be electrically and mechanically connected to the electrical apparatus 400 in a detachable manner, and the third interface 113 is disposed on an outer surface of the housing 110. In this example, the first interface 111 and the second interface 112 are the same. In other examples, the first interface 111 and the second interface 112 may be different.

For clarity, only the structure of the first accommodation cavity 101 is described in detail. The structure of the second accommodation cavity 102 is symmetrical to that of the first accommodation cavity 101. The first accommodation cavity 101 may be formed with a first groove 161, the first battery pack 200 can be detachably inserted into the first groove 161 along a direction of a first straight line 131, and the first battery pack 200 can also be removed from the first groove 161 along the direction of the first straight line 131. It is to be understood that a guide structure 163 for guiding the first battery pack 200 to be inserted into the first groove 161 along the direction of the first straight line 131 may be further provided in the first accommodation cavity 101 so that the first battery pack 200 can be more accurately positioned in the first groove 161. A lock 164 for locking the first battery pack 200 in the first groove 161 may be further provided in the first accommodation cavity 101 or the housing 110. The lock 164 can lock the first battery pack 200 and also allows the first battery pack 200 to be removed so that the first battery pack 200 can be prevented from shaking. An ejection structure 165 for ejecting the first battery pack 200 may be further provided in the first accommodation cavity 101 so that the user can remove the first battery pack 200 with less effort. Optionally, the adapter 100 further includes a cover. The cover is movably connected to the housing 110 and has an open state and a closed state. When the cover is in the open state, the first groove 161 is opened, and a user may insert the first battery pack 200 into the first groove 161. When the cover is in the closed state, the first groove 161 is closed so that the first battery pack 200 in the housing 110 can be protected to a certain extent. In this example, the first accommodation cavity 101 and the second accommodation cavity 102 may be separated by a partition 103. In this example, the first interface 111 and the second interface 112 are disposed on two sides of the partition 103 and are symmetrically arranged.

The first accommodation cavity 101 and the second accommodation cavity 102 may be combined into one accommodation cavity with a relatively large size. That is to say, the partition 103 is removed, the adapter 100 includes only one large accommodation cavity, and multiple battery packs are mounted to the one accommodation cavity. For example, the first interface 111 and the second interface 112 are disposed on two opposite surfaces of the accommodation cavity. Alternatively, the adapter 100 may include only one first accommodation cavity 101 to which only one first battery pack 200 can be mounted. That is to say, the number of accommodation cavities and the number of battery packs are not limited particularly, and the correspondence relationship is not limited to a one-to-one correspondence relationship.

In an example, when the first battery pack 200 is mounted to the adapter 100, at least 70% of the first battery pack 200 is accommodated in the accommodation cavity. In an example, when the first battery pack 200 is mounted to the adapter 100, at least 60% of the first battery pack 200 is accommodated in the accommodation cavity. In an example, when the first battery pack 200 is mounted to the adapter 100, at least 80% of the first battery pack 200 is accommodated in the accommodation cavity. In an example, when the first battery pack 200 is mounted to the adapter 100, all of the first battery pack 200 is accommodated in the accommodation cavity. The first battery pack 200 has a height direction extending along the direction in which the first battery pack 200 is inserted into the first groove 161 and further has a length direction and a width direction perpendicular to the height direction. A dimension of the first battery pack 200 in the length direction is greater than a dimension of the first battery pack 200 in the width direction. Meanwhile, the accommodation cavity has a depth direction extending along the direction in which the first battery pack 200 is inserted into the first groove 161. In this example, that at least 70% of the first battery pack 200 is accommodated in the accommodation cavity refers to that the depth D of the accommodation cavity is greater than or equal to 70% of the height H of the first battery pack 200. In an example, the depth of the accommodation cavity is greater than or equal to 60% of the height H of the first battery pack 200. When the depth of the accommodation cavity is greater than or equal to the height of the first battery pack 200, the first battery pack 200 can all be accommodated in the accommodation cavity. In other examples, other measurement methods may be adopted, for example, accurate calculation is performed according to the volume accommodated in the accommodation cavity.

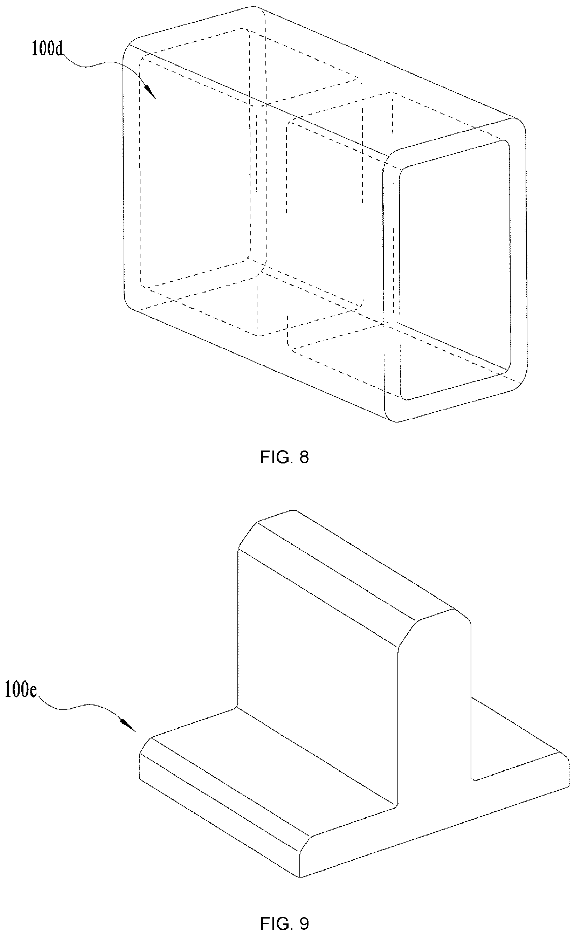

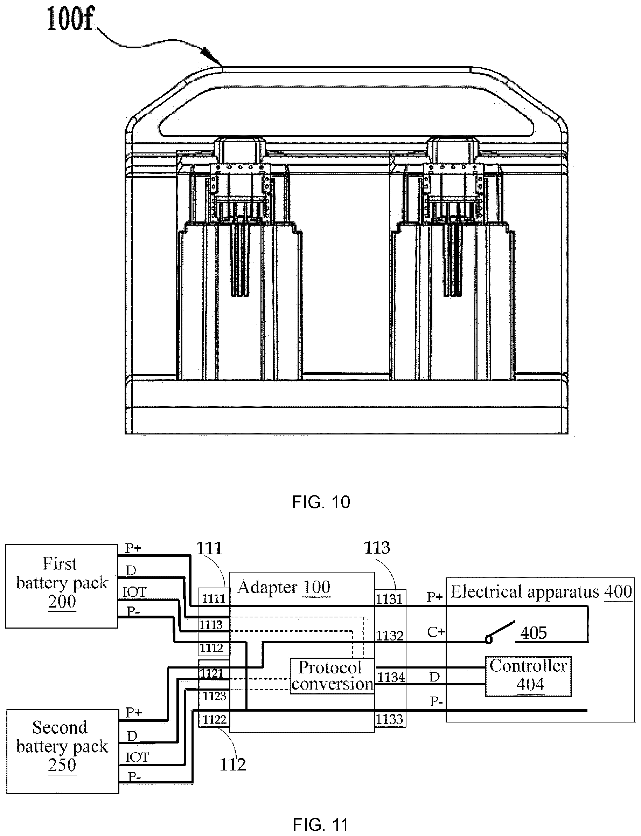

It is to be understood that the first groove 161 may be opened upward or opened leftward or rightward. For example, in FIG. 8, an adapter 100d is still approximately a rectangular cuboid, but grooves of two accommodation cavities of the adapter 100d are opened to two opposite sides so that the user conveniently inserts and removes battery packs from the two sides. Further, the adapter 100 is limited to the rectangular cuboid and the shape of the groove is not limited. For example, in FIG. 9, an adapter 100e is in the shape of an inverse T. For example, in FIG. 10, an adapter 100f is in the shape of a straight line. The specific shape of the adapter 100 is not limited in the present application as long as the first interface 111, the second interface 112, and the third interface 113 can be reasonably arranged.

The adapter 100 is further formed with a mounting track 162 configured to guide the adapter 100 to be mounted to the electrical apparatus 400. Optionally, the adapter 100 is also equipped with anti-collision and anti-puncture structural parts. In an example, a metal mesh or a metal plate is used for enclosing the first battery pack 200 and the second battery pack 250. Alternatively, shock-absorbing elastic elements 167 are added under the first battery pack 200 and the second battery pack 250, such as springs or rubber pads. Optionally, the adapter 100 further includes a handle 166 for the user to conveniently move and carry the entire adapter 100. Optionally, the adapter 100 further includes a direct current power outlet and/or an alternating current power outlet so that the adapter 100 can provide external apparatuses with a direct current and/or an alternating current. In this manner, the user can more conveniently use the adapter 100 to charge mobile phones or power household devices.

Referring to FIGS. 2A to 2C, the first battery pack 200 as an example mainly includes a housing 210, a cell group 220 accommodated in the housing 210 and including multiple cells 221, and battery pack connection terminals 230 connected to connection terminals of a matching electronic device. For example, the battery pack connection terminals 230 match the first interface 111, which can be mechanically and electronically coupled.

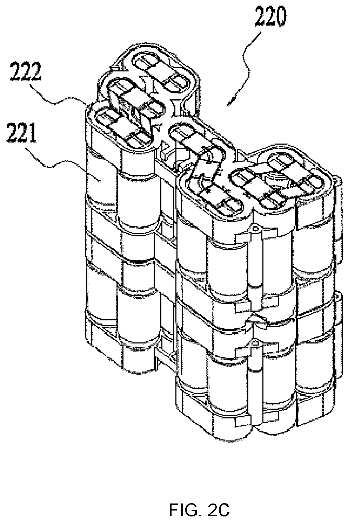

The cell group 220 is accommodated in the housing 210 and includes multiple cells 221 connected in series, in parallel, or in series and in parallel. The multiple cells 221 are integrated in a battery housing 1612 to form a whole. Each cell 221 may be specifically a lithium cell unit. In an example, the cell 221 is a lithium iron phosphate battery. In an example, the cell 221 is a ternary lithium battery. In an example, the cell 221 is a lead-acid battery. It is to be understood that the cell 221 is not necessarily a cylinder shown in FIG. 2C and may be in other shapes such as a rectangular cuboid, a blade, and a pouch. In an example, the multiple cells 221 may include two or more different types of cells, for example, 18650 and 21710 cells, lithium iron phosphate cells and ternary lithium cells, or liquid cells, solid-state cells, and semi-solid-state cells. The cell 221 is configured to store energy and can be repeatedly charged and discharged. The cells 221 are electrically connected by a connection assembly 222.

The battery pack connection terminals 230 include a battery pack positive terminal 233 and a battery pack negative terminal 234, the battery pack positive terminal 233 is electrically connected to a negative electrode of the cell group 220, and the battery pack negative terminal 234 is electrically connected to a positive electrode of the cell group 220. In this example, the battery pack connection terminals 230 further include communication terminals, that is, a first battery pack terminal 231 and a second battery pack 250 terminal 232, where the first battery pack terminal 231 is used for transmitting first-type data, and the second battery pack 250 terminal 232 is used for transmitting second-type data. The first-type data is data for normal operation, and the second-type data is data for a data analysis. Multiple communication terminals improve communication quality and communication efficiency. Of course, the battery pack connection terminals 230 may include only one communication terminal. The battery pack connection terminals 230 can be electrically and mechanically connected to the first interface 111 of the adapter 100 in a detachable manner.

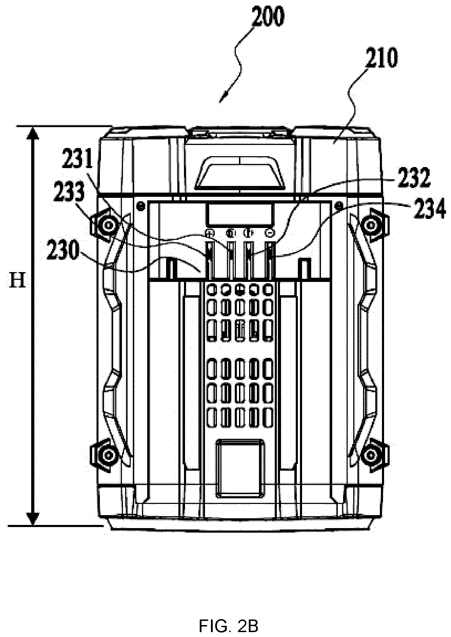

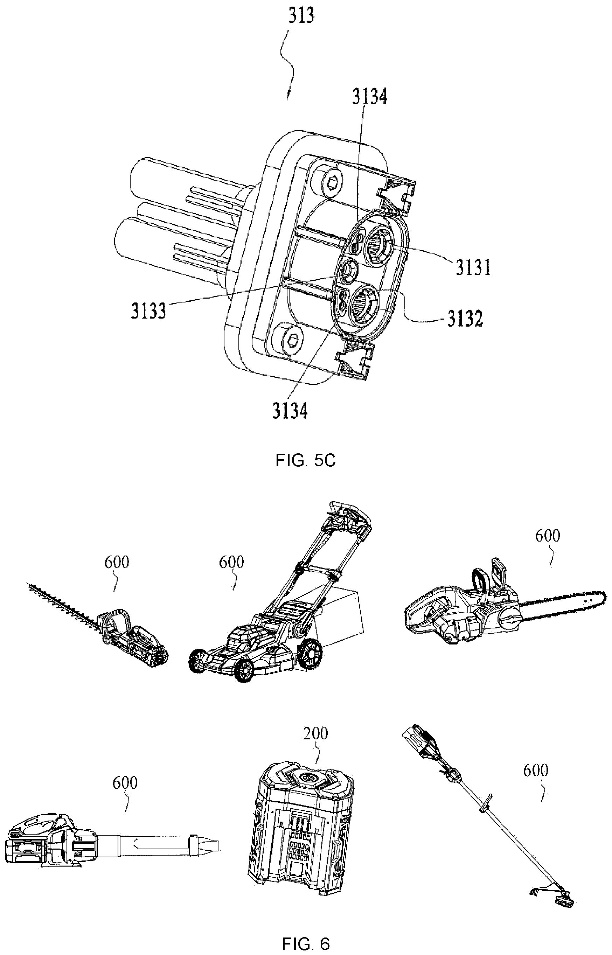

FIG. 6 is a schematic view of power platforms to which the battery pack shown in FIGS. 2A, 2B, or 2C belongs. As shown in FIG. 6, the first battery pack 200 belongs to a small power platform and can power a power tool 600. The power tool 600 may be a garden tool such as a string trimmer, a hedge trimmer, a blower, or a chain saw, a torque output tool such as an electric drill or an electric hammer, a sawing tool such as an electric circular saw, a jig saw, or a reciprocating saw, or a grinding tool such as an angle grinder or a sander. The power tool 600 may be a hand-propelled power tool such as a push mower or a hand-propelled snow thrower. In the above examples, the first battery pack 200 can directly supply power to the power tool 600. Furthermore, the first battery pack 200 may be further configured to supply power through the adapter 100 to the outdoor traveling apparatus such as the riding mower 410 and the energy storage device such as the energy station 420.

In this example, the energy of the first battery pack 200 is greater than or equal to 130 Wh and less than or equal to 1000 Wh. Further, the energy of the first battery pack 200 is greater than or equal to 130 Wh and less than or equal to 500 Wh. Thus, when only one first battery pack 200 and no second battery pack 250 is mounted to the adapter 100, a discharge time of the first battery pack 200 can still satisfy the most basic requirement. For example, when the adapter 100 with only one first battery pack 200 mounted is mounted to the riding mower 410, the first battery pack 200 may be used alone for power supply. Since the energy of the first battery pack 200 is greater than or equal to 130 Wh, the discharge time of the first battery pack 200 can satisfy an urgent need of the user to cut part of grass. In other words, the use of the user is not delayed.

Further, in this example, the weight of the first battery pack 200 is greater than or equal to 0.1 kg and less than or equal to 4 kg so that the first battery pack 200 can be prevented from being too heavy to be easy to carry. For example, the weight of the first battery pack 200 is greater than or equal to 1 kg and less than or equal to 4 kg so that the first battery pack 200 can satisfy the requirements for a sufficient capacity and a sufficient discharge time when prevented from being too heavy.

The first battery pack 200 and the second battery pack 250 may be the same or different. For example, the first battery pack 200 is a 1P pack and the second battery pack 250 is a 2P pack. That is to say, the second battery pack 250 and the first battery pack 200 belong to the same power platform but have different capacities. For example, the first battery pack 200 and the second battery pack 250 have the same interface. The second battery pack 250 has a configuration similar to that of the first battery pack 200, and the second battery pack 250 is not described in detail here.

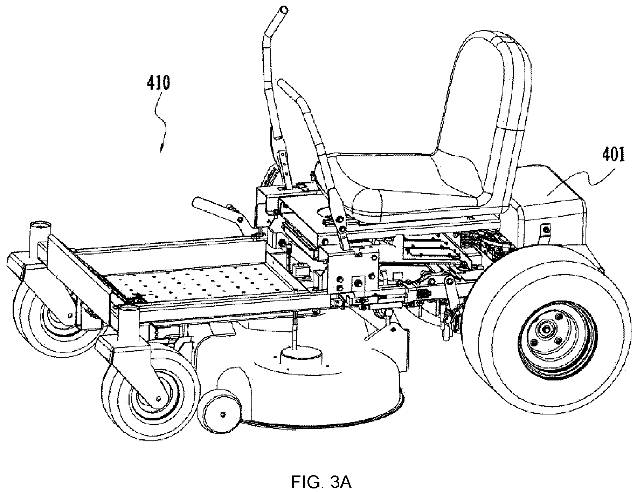

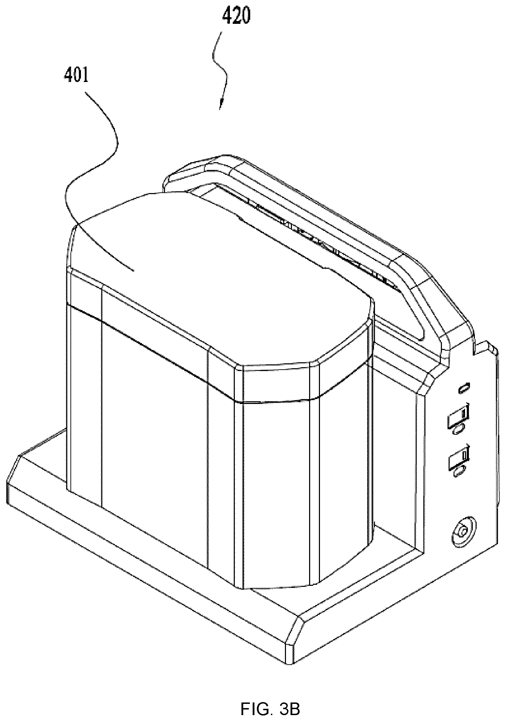

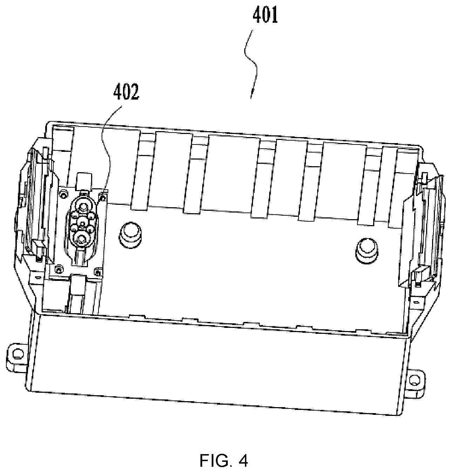

FIG. 3A is a perspective view of an electrical apparatus to which the adapter shown in FIG. 1A or 1B is mounted according to an example of the present application. FIG. 3B is a perspective view of an electrical apparatus to which the adapter shown in FIG. 1A or 1B is mounted according to another example of the present application. FIG. 4 is a perspective view of a power supply compartment of the electrical apparatus shown in FIG. 3A or 3B. The adapter 100 is mounted to a power supply compartment 401 of the electrical apparatus 400 to supply power to the electrical apparatus 400. In an example, the power supply compartment 401 is as shown in FIG. 4, and different electrical apparatuses 400, for example, the riding mower 410 in FIG. 3A and the energy station 420 in FIG. 3B, may have the same power supply compartment 401. The third interface 113 of the adapter 100 can be coupled to an interface 402 of the power supply compartment 401.

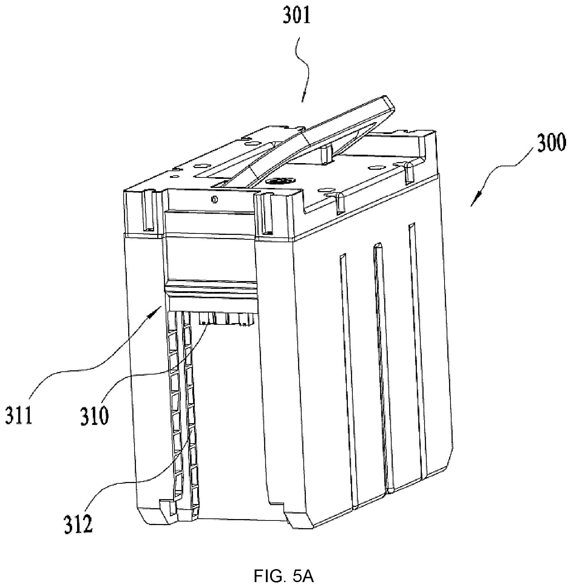

The riding mower 410 may also be powered by a power supply device 301. As shown in FIG. 5A, a connection interface 311 of the power supply device 301 is the same as the third interface 113 of the adapter 100. In this manner, the interface 402 of the power supply compartment 401 can be coupled to both the power supply device 301 and the adapter 100. Thus, the user can freely choose whether the power supply device 301 or the adapter 100 is used to supply power to the riding mower 410. It is to be noted that the power supply device 301 is not limited to a battery pack. In this example, the power supply device 301 is a third battery pack 300, so the connection interface 311 of the power supply device 301 is a connection interface 310 of the third battery pack. In other examples, the power supply device 301 may be a combination of the battery pack and another adaption structure, for example, the battery pack plus an external compartment or a configurable cell module plus a housing.

Since the user can use the power supply device 301 and the adapter 100 interchangeably, in this example, the power supply device 301 and the adapter 100 are similar in appearance. Thus, both the power supply device 301 and the adapter 100 can be properly mounted to the power supply compartment 401 of the electrical apparatus 400. In an example, the volume ratio of the adapter 100 to the power supply device 301 is greater than or equal to 0.7 and less than or equal to 1.2. In an example, the volume ratio of the adapter 100 to the power supply device 301 is greater than or equal to 0.6 and less than or equal to 1. Referring to FIG. 1B, in an example, the area of a cross-section of the adapter 100 in a plane p parallel to the third interface 113 is greater than or equal to 60% of the area of a cross-section of the power supply device 301 in the plane. In an example, the area of the cross-section of the adapter 100 in the plane p parallel to the third interface 113 is greater than or equal to 65% of the area of the cross-section of the power supply device 301 in the plane.

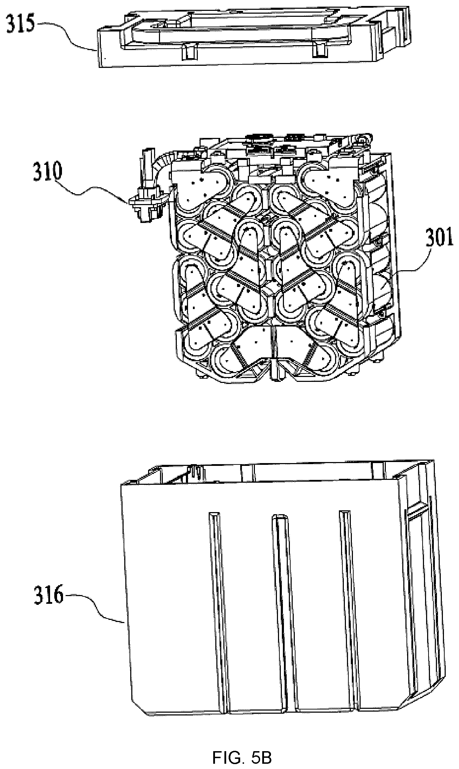

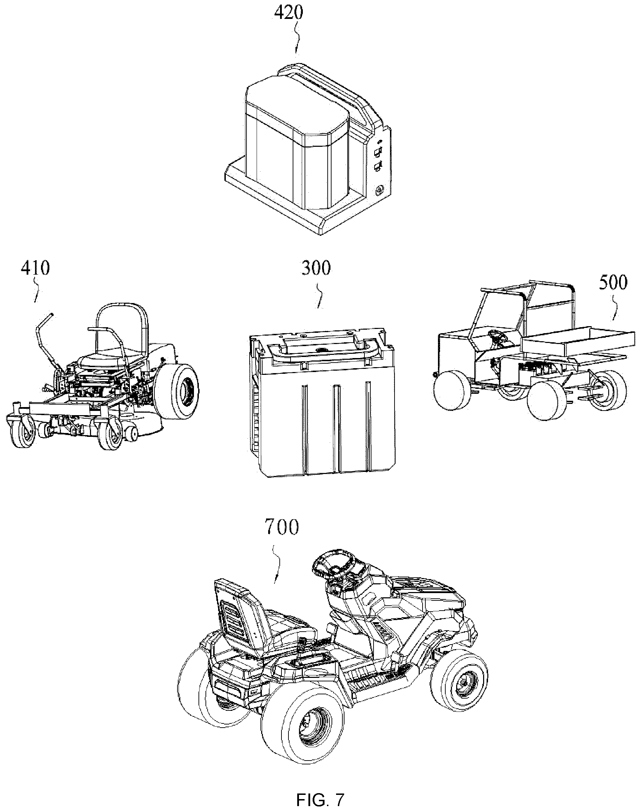

FIG. 7 is a schematic view of power platforms to which the battery pack shown in FIGS. 5A, 5B, or 5C belongs. For clarity of description, in the following examples, it is assumed that the power supply device 301 is the third battery pack 300. As shown in FIG. 7, the third battery pack 300 belongs to a large power platform and is configured to power the outdoor traveling apparatus such as the riding mower 410, the all-terrain vehicle 500, or the tractor 700 and further configured to power the energy storage device such as the energy station 420. The third battery pack 300 includes a housing 316 and multiple cell units 301 connected in series, in parallel, or in series and in parallel. Optionally, the third battery pack 300 includes a cover 315. The multiple cell units 301 are integrated in the housing 316 to form a whole. In an example, each cell unit 301 is a lithium iron phosphate battery. **In** an example, the cell unit 301 is a ternary lithium battery. **In** an example, the cell unit 301 is a silicon-carbon battery. **In an** example, the cell unit 301 is a solid-state or semi-solid-state battery. **In** an example, the cell unit 301 is a sodium-ion battery. Similar to those of the first battery pack 200, the multiple cell units 301 of the third battery pack 300 may include two or more different types of cells. **In** an example, the cell 221 of the first battery pack 200 and the cell unit 301 of the third battery pack 300 are different, for example, have different chemical properties or different specifications. Of course, the cell 221 of the first battery pack 200 and the cell unit 301 of the third battery pack 300 may have the same chemical properties and the same specifications or even are completely the same. Even if the first battery pack 200 and the third battery pack 300 have the same cell, due to different connections between the cells, different numbers of cells, and/or different arrangements of the cells, the first battery pack 200 and the third battery pack 300 are different in at least one operating parameter such as weight, volume, capacity, energy, charge and discharge rate, energy density, operating temperature, and protection threshold. For example, the energy of the third battery pack 300 is greater than or equal to 2 kWh, and the energy of the first battery pack 200 is less than or equal to 1 kWh.

**In** an example, the first battery pack 200 or the second battery pack 250 has a volume greater than or equal to 1000 cubic centimeters and less than or equal to 5000 cubic centimeters, a weight greater than or equal to 1 kg and less than or equal to 5 kg, and a rated capacity greater than or equal to 1 Ah and less than or equal to 20 Ah. In an example, the first battery pack 200 or the second battery pack 250 has a volume greater than or equal to 1500 cubic centimeters and less than or equal to 4500 cubic centimeters, a weight greater than or equal to 1.2 kg and less than or equal to 4 kg, and a rated capacity greater than or equal to 1.5 Ah and less than or equal to 15 Ah. In an example, the third battery pack 300 has a volume greater than or equal to 10000 cubic centimeters and less than or equal to 30000 cubic centimeters, a weight greater than or equal to 10 kg and less than or equal to 30 kg, and a rated capacity greater than or equal to 20 Ah and less than or equal to 60 Ah. In an example, the third battery pack 300 has a volume greater than or equal to 15000 cubic centimeters and less than or equal to 25000 cubic centimeters, a weight greater than or equal to 12 kg and less than or equal to 25 kg, and a rated capacity greater than or equal to 30 Ah and less than or equal to 50 Ah.

In an example, the ratio of the rated capacity of the first battery pack 200 or the second battery pack 250 to the rated capacity of the third battery pack 300 is greater than or equal to $\frac{1}{30}$ and less than or equal to $\frac{1}{2}$. In an example, the ratio of the rated capacity of the first battery pack 200 or the second battery pack 250 to the rated capacity of the third battery pack 300 is greater than or equal to $\frac{1}{25}$ and less than or equal to $\frac{1}{3}$. In an example, the ratio of the volume of the first battery pack 200 or the second battery pack 250 to the volume of the third battery pack 300 is greater than or equal to $\frac{1}{15}$ and less than or equal to $\frac{1}{2}$. In an example, the ratio of the volume of the first battery pack 200 or the second battery pack 250 to the volume of the third battery pack 300 is greater than or equal to $\frac{1}{11}$ and less than or equal to $\frac{1}{3}$. In an example, the ratio of the weight of the first battery pack 200 or the second battery pack 250 to the weight of the third battery pack 300 is greater than or equal to $\frac{1}{20}$ and less than or equal to $\frac{1}{2}$. In an example, the ratio of the weight of the first battery pack 200 or the second battery pack 250 to the weight of the third battery pack 300 is greater than or equal to $\frac{1}{15}$ and less than or equal

to $\dfrac{1}{3}$ .

For example, in an example, the first battery pack 200, the second battery pack 250, and the third battery pack 300 have substantially the same rated voltage. In the present application, being substantially the same means an up or down fluctuation within 20%, for example, an up or down fluctuation within 10%. In an example, the rated voltage of the first battery pack 200 is greater than or equal to 40 V, the rated voltage of the second battery pack 250 is greater than or equal to 40 V, and the rated voltage of the third battery pack 300 is greater than or equal to 40 V. In an example, the first battery pack and the second battery pack 250 have a rated voltage of 56 V, and the third battery pack 300 has a rated voltage of 58 V. In an example, a difference between the rated voltages of the first battery pack 200, the second battery pack 250, and the third battery pack 300 is less than or equal to 5 V. In an example, the rated voltages of the first battery pack 200, the second battery pack 250, and the third battery pack 250 are equal.

As shown in FIG. 5A, the connection interface 310 of the third battery pack 300 is disposed on a side surface of the third battery pack 300 and at an end of a mounting track 312. In an example, as shown in FIG. 5C, the connection interface 310 includes a terminal assembly 313, and the terminal assembly includes two positive terminals and one negative terminal, where the two positive terminals include a discharging positive terminal 3131 and a charging positive terminal 3132, and the one negative terminal serves as a charging and discharging negative terminal 3133. That is to say, the charging and discharging have independent positive terminals and a common negative terminal. Similarly, the third interface 113 may be disposed on a side surface of the adapter 100 and at an end of the mounting track 162. The basic structure of the third interface 113 is consistent with that of the connection interface 310. Accordingly, a terminal assembly of the interface 402 of the power supply compartment 401 of the electrical apparatus 400 also includes two positive terminals and one negative terminal so that the interface 402 is coupled to the connection interface 310 and the third interface 113. It is to be understood that the terminal assembly 313 further includes a communication terminal 3134, and the number of communication terminals is not limited to 1. For example, two communication terminals 3134 are provided, one communication terminal is used for transmitting the first-type data, and the other communication terminal is used for transmitting the second-type data. The first-type data is data for normal operation, and the second-type data is data for a data analysis. Similarly, the third interface 113 and the interface 402 of the power supply compartment 401 also include communication terminals.

In another example, the connection interface 310, the third interface 113, and the interface 402 of the power supply compartment 401 each have one positive terminal and two negative terminals, that is to say, the charging and discharging have independent negative terminals and a common positive terminal. In another example, the connection interface 310, the third interface 113, and the interface of the power supply compartment 401 each have one positive terminal and one negative terminal, that is to say, the charging and discharging have a common positive terminal and a common negative terminal. Each terminal may be a columnar metal terminal, a sheet metal terminal, or a conductive terminal in another shape.

Referring to the circuit topology diagram of the adapter 100 shown in FIG. 11, in this example, the first interface 111 includes a positive terminal 1111, a negative terminal 1112, and a communication terminal 1113; the second interface 112 includes a positive terminal 1121, a negative terminal 1122, and a communication terminal 1123; and the third interface 113 includes a first positive terminal 1131, a second positive terminal 1132, a total negative terminal 1133, and a total communication terminal 1134. The positive terminal 1111 of the first interface 111 is electrically connected to the first positive terminal 1131, and the positive terminal 1121 of the second interface 112 is electrically connected to the second positive terminal 1132; the negative terminal 1112 of the first interface 111 and the negative terminal 1122 of the second interface 112 are connected in parallel to the total negative terminal 1133; and the communication terminal 1113 of the first interface 111 and the communication terminal 1123 of the second interface 112 are connected to the total communication terminal 1134 for communication protocol conversion. A controller 404 of the electrical apparatus 400 acquires data of the adapter 100 through the total communication terminal 1134 and selectively turns on a switch 405 of the electrical apparatus 400 according to the acquired data so that the first battery pack 200 and the second battery pack 250 are connected in parallel. For example, when the electrical apparatus 400 identifies that both the first battery pack 200 and the second battery pack 250 are mounted to the adapter 100, the switch 405 is turned on so that the first positive terminal 1131 and the second positive terminal 1132 are connected in parallel. In an example, the first battery pack 200 or the second battery pack 250 have different chemical properties from the third battery pack 300. Therefore, the electrical apparatus 400 can distinguish the adapter 100 from the third battery pack 300 according to the chemical properties. Thus, the switch is turned on when the first battery pack 200 and the second battery pack 250 are used for power supply, and the switch is turned off when the third battery pack 300 is used for power supply. Of course, when only the first battery pack 200 is mounted to the adapter 100, the electrical apparatus 400 can also be powered without turning on the switch 405.

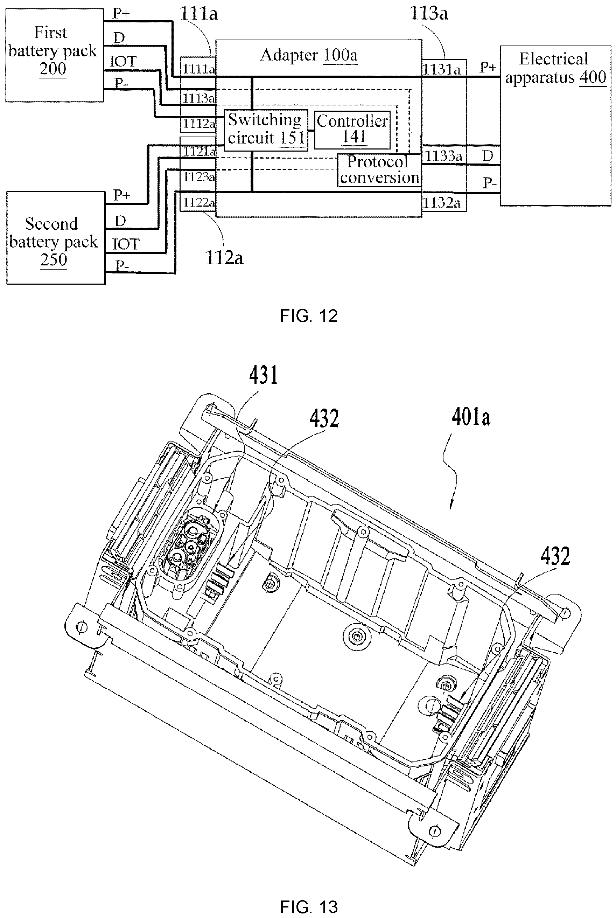

Referring to the circuit topology diagram of an adapter 100a shown in FIG. 12, in another example extended, a first interface 111a includes a positive terminal 1111a, a negative terminal 1112a, and a communication terminal 1113a; a second interface 112a includes a positive terminal 1121a, a negative terminal 1122a, and a communication terminal 1123a; and a third interface 113a includes a positive terminal 1131a, a negative terminal 1132a, and a communication terminal 1133a. The positive terminal 1111a of the first interface 111a is connected to the positive terminal 1131a of the third interface 113a, and the negative terminal 1122a of the second interface 112a is connected to the negative terminal 1132a of the third interface 113a. When the adapter 100a is configured to connect the first battery pack 200 and the second battery pack 250 in parallel, the negative terminal 1112a of the first interface 111a and the negative terminal 1122a of the second interface 112a are connected in parallel to the negative terminal 1132a of the third interface 113a, and the positive terminal 1111a of the first interface 111a and the positive terminal 1121a of the second interface 112a are connected in parallel to the positive terminal 1131a of the third interface 113a. When the adapter 100a is configured to connect the first battery pack 200 and the second battery pack 250 in series, the positive terminal 1111a of the first interface 111a is electrically connected to the positive terminal 1131a of the third interface 113a, the negative terminal 1112a of the first interface 111a is connected to the positive terminal 1121a of the second interface 112a, and the negative terminal 1122a of the second interface 112a is electrically connected to the negative terminal 1132a of the third interface 113a. Further, the adapter 100a includes a controller 141 and a switching circuit 151, where the switching circuit 151 can selectively connect the negative terminal 1112a of the first interface 111a to the positive terminal 1121a of the second interface 112a or connect the negative terminal 1112a of the first interface 111a to the negative terminal 1132a of the third interface 113a and connect the positive terminal 1121a of the second interface 112a to the positive terminal 1131a of the third interface 113a to switch the first battery pack 200 and the second battery pack 250 between a parallel connection or a series connection. The controller 141 may be further configured to manage the charging and discharging of the first battery pack 200 and the second battery pack 250 and has functions such as overvoltage protection, undervoltage protection, overcurrent protection, temperature protection, and cell balancing.

The adapter 100a shown in FIG. 12 has one positive terminal of the third interface 113 less than the adapter 100 shown in FIG. 11, but the third interfaces 113 and 113a can share the same structural parts except that a second positive electrode slot has no corresponding terminal. Similarly, the third interface 113a of the adapter 100a and the connection interface 310 of the third battery pack 300 may have the same structural parts and different terminal assemblies. For example, the connection interface 310 of the third battery pack 300 includes the charging positive terminal 3131, the discharging positive terminal 3132, the negative terminal 3133, and the communication terminal 3134, while the third interface 113a of the adapter 100a includes the positive terminal 1131a, the negative terminal 1132a, and the communication terminal 1133a.

In an example extended, multiple types of interfaces may be integrated into a power supply compartment 401a of the electrical apparatus 400 such as the riding mower 410 or the energy station 420 so that different types of battery packs can be selectively placed in one compartment without the adapter 100. It is assumed that two types of battery packs are distinguished by interfaces, that is, a first-type battery pack 10 and a second-type battery pack 20 have different interfaces and are configured to be coupled to different interfaces. Further, it is assumed that the volume of the first-type battery pack 10 is greater than or equal to twice the volume of the second-type battery pack 20. Specifically, the first-type battery pack 10 may be the third battery pack 300 and the second-type battery pack 20 may be the first battery pack 200. As shown in FIG. 13, the power supply compartment 401a includes a first-type interface 431 configured to be electrically and mechanically connected to the first-type battery pack 10 in a detachable manner; and at least two second-type interfaces 432, where each second-type interface 432 is configured to be electrically and mechanically connected to the second-type battery pack 20 in a detachable manner. In this example, two types of interfaces are both disposed on side walls of the power supply compartment 401a, but the first-type interface 431 is not coplanar with at least one second-type interface 432. Specifically, two second-type interfaces 432 are disposed on two opposite surfaces of the power supply compartment 401a, for example, the left surface and the right surface of the inner wall. When the second-type battery pack 20 is mounted, two second-type battery packs 20 are mounted back to back. The first-type interface 431 is coplanar with one of the two second-type interfaces 432, for example, the first-type interface 431 is disposed on the left surface or the right surface of the inner wall of the power supply compartment 401. According to the shape and position of an interface of the first-type battery pack 10, the first-type interface 431 may be coplanar with neither of the two second-type interfaces 432, for example, the first-type interface 431 is disposed on the front surface or the rear surface of the inner wall of the power supply compartment 401a. In another example, the first-type interface 431 is coplanar with the second-type interfaces 432, for example, all interfaces are disposed on the bottom surface of the power supply compartment 401a. The above schemes are particularly applicable to the case where the sizes of the first-type battery pack 10 and the second-type battery pack 20 have a relatively large difference. In this manner, when the diversity of power sources of the electrical apparatus 400 is increased, space in the power supply compartment 401 can be reasonably utilized to avoid waste.

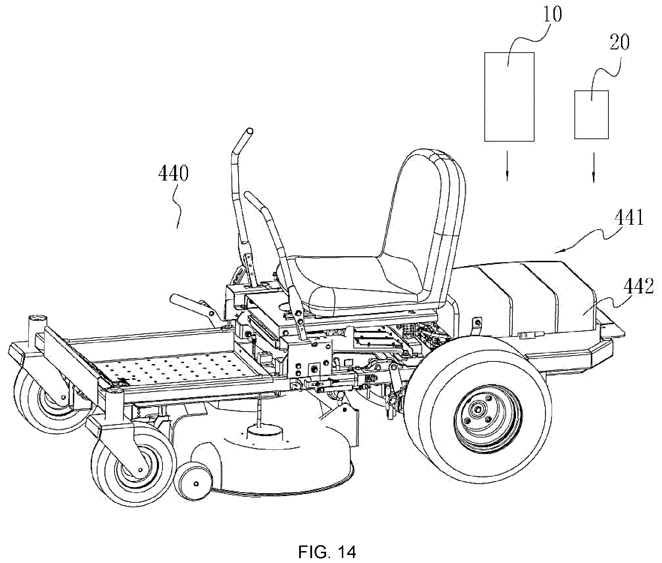

The adapter 100 or the multi-purpose power supply compartment 401a is used so that the first-type battery pack 10 and the second-type battery pack 20 can be used interchangeably. Further, when the electrical apparatus 400 has multiple power supply mounting portions, multiple free combinations of the first-type battery pack 10 and the second-type battery pack 20 can be achieved with the adapter 100 or the multi-purpose power supply compartment 401a. As shown in FIG. 14, a power supply assembly 441 of a riding mower 440 has multiple (three in the figure) mounting portions 442, the multiple mounting portions 442 have the same structure, and any one of the first-type battery pack 10 or the second-type battery pack 20 is selectively mounted to each mounting portion 442. For example, the user may mount two second-type battery packs 20 in each of the three mounting portions 442; the user may mount two second-type battery packs 20 in each of two mounting portions 442 and mount one first-type battery pack 10 in one mounting portion 442; the user may mount two second-type battery packs 20 in one mounting portion 442 and mount one first-type battery pack 10 in each of two mounting portions 442; or the user may mount one first-type battery pack 10 in each of the three mounting portions 442. In an example, the mounting portion 442 is not limited to an enclosed "compartment", and the mounting portion 442 may be open or semi-open.

In an example, each mounting portion 442 includes the first-type interface 431 applicable to the first-type battery pack 10 and the second-type interface 432 applicable to the second-type battery pack 20. **In** another example, each mounting portion 442 includes only the first-type interface 431 that can be coupled to the first-type battery pack 10, the second-type battery pack 20 is mounted to the adapter 100, and the adapter 100 can be coupled to the mounting portion 442. **It** is to be understood that the power supply assembly 441 of the riding mower 440 further includes a power management board 443 configured to control the charging and discharging of the first-type battery pack 10 and the second-type battery pack 20 according to at least operating parameters of the first-type battery pack 10 and the second-type battery pack 20. In an example, at least one of the energy ratio, capacity ratio, and volume ratio of the first-type battery pack 10 to the second-type battery pack 20 is greater than or equal to 5. In an example, at least one of the energy ratio, capacity ratio, and volume ratio of the first-type battery pack 10 to the second-type battery pack 20 is greater than or equal to 4. In an example, the total energy of the first-type battery pack is greater than 2 kWh.

An electrical apparatus system including the adapter, electrical apparatus, and battery pack makes it convenient for the user to flexibly select the power supply assembly of the electrical apparatus according to the need and budget of the user, greatly improving the interchangeability and utilization of different types of battery packs. **In** addition, other compositions and functions of the adapter, electrical apparatus, and system thereof according to the examples of the present application are known to those of ordinary skill in the art, which are not described in detail here to reduce redundancy.

In the detailed description, the description with reference to the terms "one embodiment", "some embodiments", "example", "specific example", or "some examples" means that the specific features, structures, materials or characteristics described in conjunction with the embodiment or example are included in at least one embodiment or example of the present application. In this detailed description, the schematic representation of the above terms does not necessarily refer to the same embodiment or example. Moreover, the specific features, structures, materials or characteristics described may be combined in any one or more embodiments or examples in a suitable manner.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. An adapter, comprising:

   a housing;
   a first interface configured to be electrically and mechanically connected to a first battery pack in a detachable manner;
   a second interface configured to be electrically and mechanically connected to a second battery pack in a detachable manner; and
   a third interface configured to be electrically and mechanically connected to an electrical apparatus in a detachable manner;
   wherein the housing forms an accommodation cavity, the first interface and the second interface are disposed in the accommodation cavity, the third interface is disposed outside the accommodation cavity, and when the first battery pack is mounted to the adapter, at least 70% of the first battery pack is accommodated in the accommodation cavity.

2. The adapter according to claim 1, wherein the electrical apparatus comprises a power supply compartment, and when the adapter is mounted to the power supply compartment, the adapter is accommodated in the power supply compartment.

3. The adapter according to claim 1, wherein a length of the accommodation cavity in a direction in which the first battery pack is inserted and removed is defined as a depth of the accommodation cavity, a length of the first battery pack in the direction in which the first battery pack is inserted and removed is defined as a height of the first battery pack, and the depth of the accommodation cavity is greater than or equal to 60% of the height of the first battery pack.

4. The adapter according to claim 1, wherein the first battery pack and the second battery pack each have a voltage greater than or equal to 40 V.

5. The adapter according to claim 1, further comprising a handle.

6. The adapter according to claim 1, wherein a partition is provided in the accommodation cavity, and the first interface and the second interface are disposed on two surfaces of the partition.

7. The adapter according to claim 1, wherein the first interface and the second interface are disposed on two opposite surfaces of the accommodation cavity.

8. The adapter according to claim 1, wherein the housing is a rectangular cuboid.

9. An electrical apparatus system, comprising an electrical apparatus and an adapter, the electrical apparatus being configured to be connected to a power supply device and powered by the power supply device, and the adapter comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to the electrical apparatus in a detachable manner;
wherein the power supply device comprises a connection interface configured to be electrically and mechanically connected to the electrical apparatus in a detachable manner; and
the third interface is disposed on an outer surface of the housing, the third interface is the same as the connection interface, and a volume ratio of the adapter to the power supply device is greater than or equal to 0.7 and less than or equal to 1.2.

10. The electrical apparatus system according to claim 9, wherein the housing is a rectangular cuboid.

11. The electrical apparatus system according to claim 9, wherein the power supply device is a battery pack connectable to the electrical apparatus directly.

12. The electrical apparatus system according to claim 9, wherein the power supply device comprises a battery pack and an adaption structure.

13. The electrical apparatus system according to claim 9, wherein the housing comprises an accommodation cavity.

14. An adapter, comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to an electrical apparatus in a detachable manner;
wherein the electrical apparatus is configured to be connected to a power supply device and powered by the power supply device, and the power supply device comprises a connection interface configured to be electrically and mechanically connected to the electrical apparatus in a detachable manner; and
the third interface is disposed on an outer surface of the housing, the third interface is the same as the connection interface, and an area of a cross-section of the adapter in a plane parallel to the third interface is greater than or equal to 60% of an area of a cross-section of the power supply device in the plane.

15. The adapter according to claim 14, wherein the power supply device is a battery pack connectable to the electrical apparatus directly.

16. The adapter according to claim 14, wherein the power supply device comprises a battery pack and an adaption structure.

17. The adapter according to claim 14, wherein the adapter is in a shape of an inverse T.

18. An electrical apparatus system, comprising an electrical apparatus and an adapter, the electrical apparatus being configured to be powered by a third battery pack, and the adapter comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to the electrical apparatus in a detachable manner;

wherein the first battery pack, the second battery pack, and the third battery pack have substantially a same rated voltage.

19. An adapter, comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to an electrical apparatus in a detachable manner, wherein the electrical apparatus is further configured to be powered by a third battery pack;
wherein the first battery pack, the second battery pack, and the third battery pack have substantially a same rated voltage.

20. The adapter according to claim 19, wherein the first battery pack and the second battery pack are connected in parallel.

21. The adapter according to claim 19, wherein the electrical apparatus comprises a switch, and when the electrical apparatus identifies the first battery pack and the second battery pack for power supply, the switch is turned on so that the first battery pack and the second battery pack are connected in parallel.

22. The adapter according to claim 19, wherein the first battery pack and the second battery pack are each applicable to a power tool.

23. The adapter according to claim 19, wherein the rated voltage is greater than or equal to 40 V.

24. An adapter, comprising:

a housing;
a first interface configured to be electrically and mechanically connected to a first battery pack in a detachable manner and comprising a positive terminal, a negative terminal, and a communication terminal;
a second interface configured to be electrically and mechanically connected to a second battery pack in a detachable manner and comprising a positive terminal, a negative terminal, and a communication terminal; and
a third interface configured to be electrically and mechanically connected to an electrical apparatus in a detachable manner;
wherein the third interface comprises a first positive terminal, a second positive terminal, a total negative terminal, and a total communication terminal, the positive terminal of the first interface is connected to the first positive terminal, and the positive terminal of the second interface is connected to the second positive terminal.

25. The adapter according to claim 24, wherein the negative terminal of the first interface and the negative terminal of the second interface are connected in parallel to the total negative terminal.

26. The adapter according to claim 24, wherein the communication terminal of the first interface and the communication terminal of the second interface are connected to the total communication terminal for communication protocol conversion.

27. The adapter according to claim 24, wherein the electrical apparatus comprises a switch, and when the electrical apparatus identifies the first battery pack and the second battery pack, the switch is turned on so that the first positive terminal and the second positive terminal are connected in parallel.

28. The adapter according to claim 24, wherein the electrical apparatus acquires data of the adapter through the total communication terminal.

29. The adapter according to claim 24, wherein the electrical apparatus is further configured to be powered by a third battery pack, and an interface of the third battery pack comprises two positive terminals and one negative terminal.

30. An adapter, comprising:

a housing;
a first interface configured to be electrically and mechanically connected to a first battery pack in a detachable manner and comprising a positive terminal, a negative terminal, and a communication terminal;
a second interface configured to be electrically and mechanically connected to a second battery pack in a detachable manner and comprising a positive terminal, a negative terminal, and a communication terminal; and
a third interface configured to be electrically and mechanically connected to an electrical apparatus in a detachable manner and comprising a positive terminal, a negative terminal, and a communication terminal;
wherein the positive terminal of the first interface is connected to the positive terminal of the third interface, the negative terminal of the second interface is connected to the negative terminal of the third interface, the adapter further comprises a controller and a switching circuit, and the controller is configured to control the switching circuit to switch the first battery pack and the second battery pack between a parallel connection and a series connection.

31. The adapter according to claim 30, wherein when the first battery pack and the second battery pack are configured to be connected in parallel, the negative terminal of the first interface and the negative terminal of the second interface are connected in parallel to the negative terminal of the third interface, and the positive terminal of the first interface and the positive terminal of the second interface are connected in parallel to the positive terminal of the third interface.

32. The adapter according to claim 30, wherein when the first battery pack and the second battery pack are configured to be connected in series, the negative terminal of the first interface is connected to the positive terminal of the second interface.

33. An electrical apparatus system, comprising an electrical apparatus and an adapter, the electrical apparatus being configured to be powered by a third battery pack, and the adapter comprising:

a housing;
a first interface configured to be electrically and mechanically connected to a first battery pack in a detachable manner, wherein a terminal assembly of the first interface comprises a positive terminal, a negative terminal, and a communication terminal;
a second interface configured to be electrically and mechanically connected to a second battery pack in a detachable manner, wherein a terminal assembly of the second interface comprises a positive terminal, a negative terminal, and a communication terminal; and
a third interface configured to be electrically and mechanically connected to the electrical apparatus in a detachable manner;
wherein the third battery pack comprises a connection interface, the third interface has same structural parts as the connection interface, and the third interface and the connection interface have different terminal assemblies.

34. The electrical apparatus system according to claim 33, wherein a terminal assembly of the connection interface comprises a charging positive terminal, a discharging positive terminal, a negative terminal, and a communication terminal.

35. The electrical apparatus system according to claim 33, wherein a terminal assembly of the third interface comprises a positive terminal, a negative terminal, and a communication terminal.

36. The electrical apparatus system according to claim 33, wherein the negative terminal of the first interface and the negative terminal of the second interface are connected in parallel to a negative terminal of the third interface, and the positive terminal of the first interface and the positive terminal of the second interface are connected in parallel to a positive terminal of the third interface.

37. The electrical apparatus system according to claim 33, wherein the negative terminal of the first interface and the positive terminal of the second interface are connected in series, the positive terminal of the first interface is electrically connected to a positive terminal of the third interface, and the negative terminal of the second interface is electrically connected to a negative terminal of the third interface.

38. The electrical apparatus system according to claim 33, wherein the adapter further comprises a switching circuit configured to switch the first battery pack and the second battery pack between a parallel connection and a series connection.

39. An electrical apparatus, comprising:

a power supply compartment configured for mounting an energy storage device to supply power to the electrical apparatus;
wherein the power supply compartment comprises:

a first-type interface configured to be electrically and mechanically connected to a first-type battery pack in a detachable manner; and
at least two second-type interfaces, each of which is configured to be electrically and mechanically connected to a second-type battery pack in a detachable manner;
wherein when the first-type battery pack is mounted to the power supply compartment, the first-type battery pack shields the at least two second-type interfaces.

40. The electrical apparatus system according to claim 39, wherein the first-type interface is not coplanar with at least one of the second-type interfaces.

41. The electrical apparatus system according to claim 39, wherein the at least two second-type interfaces are opposite to each other, and the first-type interface is coplanar with at least one of the second-type interfaces.

**42.** The electrical apparatus system according to claim 39, wherein a volume of the first-type battery pack is greater than or equal to twice a volume of the second-type battery pack.

**43.** The electrical apparatus system according to claim 39, wherein the electrical apparatus is an outdoor traveling apparatus.

**44.** The electrical apparatus system according to claim 39, wherein the electrical apparatus is an energy station.

**45.** An electrical apparatus, comprising:

a housing; and
a power supply assembly configured to supply power to the electrical apparatus;
wherein the power supply assembly comprises a plurality of mounting portions; and
any one of a first-type battery pack or a second-type battery pack is selectively mounted to each mounting portion of the plurality of mounting portions, the plurality of mounting portions have a same structure, and the first-type battery pack and the second-type battery pack have different interfaces.

**46.** The electrical apparatus system according to claim 45, wherein each mounting portion comprises a first-type interface applicable to the first-type battery pack and a second-type interface applicable to the second-type battery pack.

**47.** The electrical apparatus system according to claim 45, wherein the second-type battery pack is mounted to the mounting portion via an adapter.

**48.** The electrical apparatus system according to claim 45, wherein a volume of the first-type battery pack is greater than or equal to twice a volume of the second-type battery pack.

**49.** The electrical apparatus system according to claim 45, wherein the electrical apparatus is an outdoor traveling apparatus.

**50.** The electrical apparatus system according to claim 45, wherein the electrical apparatus is an energy station.

**51.** An electrical apparatus, comprising:

a housing; and
a power supply assembly configured to supply power to the electrical apparatus;
wherein the power supply assembly comprises a plurality of mounting portions; and

any one of a first-type battery pack or a second-type battery pack is selectively mounted to each mounting portion of the plurality of mounting portions, the plurality of mounting portions have a same structure, and at least one of an energy ratio, a capacity ratio, and a volume ratio of the first-type battery pack to the second-type battery pack is greater than or equal to 5.

**52.** The electrical apparatus system according to claim 51, wherein each mounting portion comprises a first-type interface applicable to the first-type battery pack and a second-type interface applicable to the second-type battery pack.

**53.** The electrical apparatus system according to claim 51, wherein the second-type battery pack is mounted to the mounting portion via an adapter.

**54.** The electrical apparatus system according to claim 51, wherein total energy of the first-type battery pack is greater than 2 kWh.

**55.** The electrical apparatus system according to claim 51, wherein the electrical apparatus is an outdoor traveling apparatus.

**56.** The electrical apparatus system according to claim 51, wherein the electrical apparatus is an energy station.

**57.** An electrical apparatus system, comprising an electrical apparatus and an adapter, the electrical apparatus being configured to be powered by a third battery pack, and the adapter comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to the electrical apparatus in a detachable manner;
wherein a weight ratio of the first battery pack or the second battery pack to the third battery pack is greater than or equal to $\frac{1}{20}$ and less than or equal to $\frac{1}{2}$.

**58.** The electrical apparatus system according to claim 57, wherein the first battery pack and the second battery pack are connected in parallel.

**59.** The electrical apparatus system according to claim 58, wherein the electrical apparatus comprises a switch, and when the electrical apparatus detects the first battery pack and the second battery pack for power supply, the switch is turned on so that the first battery pack and the second battery pack are connected in parallel.

**60.** The electrical apparatus system according to claim 57, wherein the first battery pack, the second battery pack, and the third battery pack each have a rated voltage greater than or equal to 40 V.

**61.** The electrical apparatus system according to claim 57, wherein the first battery pack and the third battery pack have different cells.

**62.** An adapter, comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to an electrical apparatus in a detachable manner, wherein the electrical apparatus is further configured to be powered by a third battery pack;
wherein a weight ratio of the first battery pack or the second battery pack to the third battery pack is greater than or equal to $\frac{1}{20}$ and less than or equal to $\frac{1}{2}$.

**63.** An electrical apparatus system, comprising an electrical apparatus and an adapter, the electrical apparatus being configured to be powered by a third battery pack, and the adapter comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to the electrical apparatus in a detachable manner;
wherein a volume ratio of the first battery pack or the second battery pack to the third battery pack is greater than or equal to $\frac{1}{15}$ and less than or equal to $\frac{1}{2}$.

**64.** The electrical apparatus system according to claim 63, wherein the first battery pack and the second battery pack are connected in parallel.

**65.** The electrical apparatus system according to claim 63, wherein the electrical apparatus comprises a switch, and when the electrical apparatus detects the first battery pack and the second battery pack for power supply, the switch is turned on so that the first battery pack and the second battery pack are connected in parallel.

**66.** The electrical apparatus system according to claim 63, wherein the first battery pack, the second battery pack, and the third battery pack each have a rated voltage greater than or equal to 40 V.

**67.** The electrical apparatus system according to claim 63, wherein the first battery pack and the third battery pack have different cells.

**68.** An adapter, comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to an electrical apparatus in a detachable manner, wherein the electrical apparatus is further configured to be powered by a third battery pack;
wherein a volume ratio of the first battery pack or the second battery pack to the third battery pack is greater than or equal to $\frac{1}{15}$ and less than or equal to $\frac{1}{2}$.

**69.** An electrical apparatus system, comprising an electrical apparatus and an adapter, the electrical apparatus being configured to be powered by a third battery pack, and the adapter comprising:

a housing;
a first interface configured to be electrically and mechanically connected to a first battery pack in a detachable manner;
a second interface configured to be electrically and mechanically connected to a second battery pack in a detachable manner; and

a third interface configured to be electrically and mechanically connected to the electrical apparatus in a detachable manner;

wherein a ratio of a rated capacity of the first battery pack or the second battery pack to a rated capacity of the third battery pack is greater than or equal to $\frac{1}{30}$ and less than or equal to $\frac{1}{2}$.

70. The electrical apparatus system according to claim 69, wherein the first battery pack and the second battery pack are connected in parallel.

71. The electrical apparatus system according to claim 69, wherein the electrical apparatus comprises a switch, and when the electrical apparatus detects the first battery pack and the second battery pack for power supply, the switch is turned on so that the first battery pack and the second battery pack are connected in parallel.

72. The electrical apparatus system according to claim 69, wherein the first battery pack, the second battery pack, and the third battery pack each have a rated voltage greater than or equal to 40 V.

73. The electrical apparatus system according to claim 69, wherein the first battery pack and the third battery pack have different cells.

74. An adapter, comprising:

a housing;
a first interface configured to be electrically and mechanically connected to a first battery pack in a detachable manner;
a second interface configured to be electrically and mechanically connected to a second battery pack in a detachable manner; and
a third interface configured to be electrically and mechanically connected to an electrical apparatus in a detachable manner, wherein the electrical apparatus is further configured to be powered by a third battery pack;
wherein a ratio of a rated capacity of the first battery pack or the second battery pack to a rated capacity of the third battery pack is greater than or equal to $\frac{1}{30}$ and less than or equal to $\frac{1}{2}$.

75. The adapter according to claim 74, wherein the housing forms an accommodation cavity for accommodating the first battery pack or the second battery pack.

76. The adapter according to claim 75, wherein the first interface and the second interface are disposed in the accommodation cavity, and the third interface is disposed outside the accommodation cavity.

77. The adapter according to claim 75, wherein the electrical apparatus comprises a power supply compartment, and when the adapter is mounted to the power supply compartment, the adapter is accommodated in the power supply compartment.

78. The adapter according to claim 77, wherein the electrical apparatus is a riding mower.

79. The adapter according to claim 75, wherein the housing is a rectangular cuboid, a length of the accommodation cavity in a direction in which the first battery pack is inserted and removed is defined as a depth of the accommodation cavity, a length of the first battery pack in the direction in which the first battery pack is inserted and removed is defined as a height of the first battery pack, and the depth of the accommodation cavity is greater than or equal to 60% of the height of the first battery pack.

80. The adapter according to claim 74, wherein a weight ratio of the first battery pack or the second battery pack to the third battery pack is greater than or equal to $\frac{1}{20}$ and less than or equal to $\frac{1}{2}$.

81. The adapter according to claim 75, further comprising a handle.

82. The adapter according to claim 75, wherein a partition is provided in the accommodation cavity, and the first interface and the second interface are disposed on two surfaces of the partition.

83. The adapter according to claim 75, wherein the first interface and the second interface are disposed on two opposite surfaces of the accommodation cavity.

84. The adapter according to claim 75, wherein the first interface and the second interface are the same.

85. The adapter according to claim 74, wherein the first battery pack, the second battery pack, and the third battery pack have substantially a same rated voltage.

86. The adapter according to claim 85, wherein the first battery pack has a rated voltage greater than or equal to 40 V, and the first battery pack supplies power to a power tool.

**87.** The adapter according to claim 74, wherein the first battery pack and the third battery pack have different cells.

**88.** The adapter according to claim 74, wherein the first battery pack and the second battery pack are different in capacity.

FIG. 1A

FIG. 1B

FIG. 2A

FIG. 2B

FIG. 2C

410

401

FIG. 3A

420

401

FIG. 3B

401

402

FIG. 4

FIG. 5A

315

310

301

316

FIG. 5B

313

3134

3134

3131

3133

3132

FIG. 5C

600

600

600

600

200

600

FIG. 6

420

410 300 500

700

FIG. 7

FIG. 8

FIG. 9

FIG. 10

FIG. 11

FIG. 12

FIG. 13

FIG. 14

## INTERNATIONAL SEARCH REPORT

| International application No. |
| --- |
| **PCT/CN2023/139034** |

### A. CLASSIFICATION OF SUBJECT MATTER

H01R 31/06(2006.01)i

According to International Patent Classification (IPC) or to both national classification and IPC

### B. FIELDS SEARCHED

Minimum documentation searched (classification system followed by classification symbols)

IPC: H01R

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池包, 腔, 适配器, 体积, 重量, 尺寸, 容量, cell, battery, adapter, tool, volume, weight, capacity

### C. DOCUMENTS CONSIDERED TO BE RELEVANT

| Category* | Citation of document, with indication, where appropriate, of the relevant passages | Relevant to claim No. |
| --- | --- | --- |
| X | CN 216564567 U (ZHEJIANG QIXIANG TECHNOLOGY CO., LTD.) 17 May 2022 (2022-05-17) description, paragraphs 30-68, and figures 1-6 | 1-8, 24-50 |
| Y | CN 216564567 U (ZHEJIANG QIXIANG TECHNOLOGY CO., LTD.) 17 May 2022 (2022-05-17) description, paragraphs 30-68, and figures 1-6 | 9-23, 51-88 |
| Y | CN 105794388 A (NANJING CHERVON INDUSTRY CO., LTD.) 27 July 2016 (2016-07-27) description, paragraphs 18-38, and figures 1-15 | 9-17, 51-88 |
| Y | CN 112838656 A (NANJING CHERVON INDUSTRY CO., LTD.) 25 May 2021 (2021-05-25) description, paragraphs 57-99, and figures 1-10 | 18-23 |
| A | CN 206758541 U (TTI (MACAO COMMERCIAL OFFSHORE) LIMITED) 15 December 2017 (2017-12-15) entire document | 1-88 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2024** | **20 February 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT

International application No.

**PCT/CN2023/139034**

**C. DOCUMENTS CONSIDERED TO BE RELEVANT**

| Category* | Citation of document, with indication, where appropriate, of the relevant passages | Relevant to claim No. |
|---|---|---|
| A | CN 209710732 U (NANJING CHERVON INDUSTRY CO., LTD.) 03 December 2019 (2019-12-03) entire document | 1-88 |
| A | US 2022232766 A1 (MAKITA CORP.) 28 July 2022 (2022-07-28) entire document | 1-88 |

Form PCT/ISA/210 (second sheet) (July 2022)

INTERNATIONAL SEARCH REPORT
Information on patent family members

International application No.

**PCT/CN2023/139034**

| Patent document cited in search report | | | Publication date (day/month/year) | Patent family member(s) | | | Publication date (day/month/year) |
|---|---|---|---|---|---|---|---|
| CN | 216564567 | U | 17 May 2022 | CN | 116137452 | A | 19 May 2023 |
| CN | 105794388 | A | 27 July 2016 | NZ | 732982 | A | 25 January 2019 |
| | | | | EP | 3219188 | A1 | 20 September 2017 |
| | | | | EP | 3219188 | A4 | 06 December 2017 |
| | | | | EP | 3219188 | B1 | 28 August 2019 |
| | | | | EP | 3219188 | B2 | 27 July 2022 |
| | | | | CA | 2972115 | A1 | 07 July 2016 |
| | | | | CA | 2972115 | C | 31 October 2023 |
| | | | | US | 2018160620 | A1 | 14 June 2018 |
| | | | | US | 10485166 | B2 | 26 November 2019 |
| | | | | WO | 2016107551 | A1 | 07 July 2016 |
| | | | | AU | 2015373713 | A1 | 13 July 2017 |
| | | | | AU | 2015373713 | B2 | 13 September 2018 |
| CN | 112838656 | A | 25 May 2021 | | None | | |
| CN | 206758541 | U | 15 December 2017 | AU | 2018202180 | A1 | 18 October 2018 |
| | | | | AU | 2018202180 | B2 | 07 November 2019 |
| | | | | EP | 3382772 | A1 | 03 October 2018 |
| | | | | EP | 3382772 | B1 | 01 June 2022 |
| CN | 209710732 | U | 03 December 2019 | WO | 2019129129 | A1 | 04 July 2019 |
| US | 2022232766 | A1 | 28 July 2022 | JP | 2022113136 | A | 03 August 2022 |
| | | | | DE | 102022000205 | A1 | 28 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211634992